(19) Europäisches Patentamt
European Patent Office
Office européen des brevets

(11) EP 2 784 974 A1

(12) **EUROPEAN PATENT APPLICATION**

(43) Date of publication:
**01.10.2014 Bulletin 2014/40**

(51) Int Cl.:
***H04L 9/32*** *(2006.01)*

(21) Application number: **13305371.0**

(22) Date of filing: **26.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
- **Joye, Marc**
  **35576 Cesson Sévigné (FR)**
- **Libert, Benoît**
  **35576 Cesson-Sévigné (FR)**

(74) Representative: **Huchet, Anne et al**
**Technicolor**
**1, rue Jeanne d'Arc**
**92443 Issy-les-Moulineaux Cedex (FR)**

# (54) Cryptographic devices and methods for generating and verifying linearly homomorphic structure-preserving signatures

(57) Generation of linearly homomorphic structure-preserving signature σ on a vector $(M_1, \dots, M_n) \in \hat{\mathbb{G}}^n$ by computing, in a processor (120), using a signing key sk = $\{\chi_i, \gamma_i, \delta_i\}_{i=1}^n$, signature elements (z, r, *u)* by calculating $z = \prod_{i=1}^n M_i^{-\chi_i}$, $r =$ ' $\prod_{i=1}^n M_i^{-\gamma_i}$, $u = \prod_{i=1}^n M_i^{-\delta_i}$, and outputting the signature a comprising the signature elements *(z, r, u)*. The signature is verified by verifying, in a processor (220) that $(M_1, \dots, M_n) \neq (1_{\hat{\mathbb{G}}}, \dots, 1_{\hat{\mathbb{G}}})$ and that *(z,r,u)* satisfy the equalities $1_{\mathbb{G}_T} = e(g_z, z) \cdot e(g_r, r) \cdot \prod_{i=1}^n e(g_i, M_i)$, $1_{\mathbb{G}_T} = e(h_z, z) \cdot e(h, u) \cdot \prod_{i=1}^n e(h_i, M_i)$; and determing that the signature has been successfully verified in case the verifications are successful and that the signature has not been successfully verified otherwise. Also provided are a fully-fledged scheme and a context-hiding scheme.

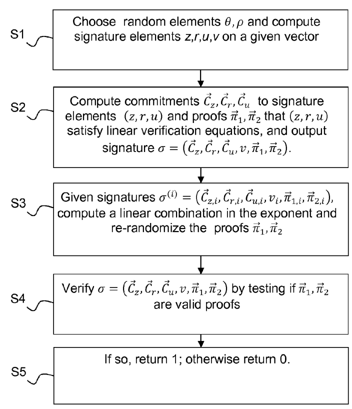


Figure 2

EP 2 784 974 A1

**Description**

TECHNICAL FIELD

The present invention relates generally to cryptography, and in particular to linearly homomorphic structure-preserving signatures.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Linearly homomorphic signatures are well known in the art of cryptography. A definition is given in D. Boneh, D. Freeman, J. Katz, B. Waters. Signing a Linear Subspace: Signature Schemes for Network Coding. In PKC'09, Lecture Notes in Computer Science 5443, pp. 68-87, 2009.

Other examples of linearly homomorphic signatures are available in:

- US 7743253, issued June 22, 2010; D.-X. Charles, K. Jain, K. Lauter. Digital signature for network coding.
- D. Boneh, D. Freeman, J. Katz, B. Waters. Signing a Linear Subspace: Signature Schemes for Network Coding. In PKC'09, Lecture Notes in Computer Science, vol. 5443, pp. 68-87, 2009.
- R. Gennaro, J. Katz, H. Krawczyk, T. Rabin. Secure Network Coding over the Integers. In PKC'10, Lecture Notes in Computer Science, vol. 6056, pp. 142-160, 2010.
- N. Attrapadung, B. Libert. Homomorphic Network Coding Signatures in the Standard Model. In PKC'11, Lecture Notes in Computer Science, vol. 6571, pp. 17-34, 2011.
- D. Boneh, D. Freeman. Linearly Homomorphic Signatures over Binary Fields and New Tools for Lattice-Based Signatures. In PKC'11, Lecture Notes in Computer Science, vol. 6571, pp. 1-16, 2011.
- D. Boneh, D. Freeman. Homomorphic Signatures for Polynomial Functions. In Eurocrypt'11, Lecture Notes in Computer Science, vol. 6632, pp. 149-168, 2011.
- D. Freeman. Improved security for linearly homomorphic signatures: A generic framework. In PKC'12, Lecture Notes in Computer Science, vol. 7293, pp. 697-714, 2012.
- D. Catalano, D. Fiore, B.Warinschi. Adaptive Pseudo-free Groups and Applications. In Eurocrypt'11, Lecture Notes in Computer Science, vol. 6632, pp. 207-223, 2011.
- D. Catalano, D. Fiore, B.Warinschi. Efficient Network Coding Signatures in the Standard Model. In PKC'12, Lecture Notes in Computer Science, vol. 7293, pp. 680-696, 2012.

It would appear that among the schemes proven secure in the standard model under standard assumptions the most efficient scheme is the one in N. Attrapadung, B. Libert, T. Peters. Computing on Authenticated Data: New Privacy Definitions and Constructions. In Asiacrypt'12, LNCS 7658, pp. 367-385, 2012.

The construction is homomorphic over the additive group $(\mathbb{Z}_p, +)$. Namely, the underlying cyclic group is $\mathbb{G} = \mathbb{Z}_p$ and messages being signed consist of a file identifier $\tau \in \{0,1\}^L$ and a vector of $\mathbb{Z}_p^n$. The scheme makes use of a bilinear map *e*: $\mathbb{G} \, x \hat{\mathbb{G}} \rightarrow \mathbb{G}_T$ defined between groups $(\mathbb{G}, \hat{\mathbb{G}}, \mathbb{G}_T)$ of prime order *p*.

**Keygen**($\lambda$, *n*): given a security parameter $\lambda \in \mathbb{N}$ and an integer $n \in \text{poly}(\lambda)$ denoting the dimension of vectors to be signed, choose bilinear groups $(\mathbb{G}, \hat{\mathbb{G}}, \mathbb{G}_T)$ of prime order $p > 2^\lambda$. Choose $\alpha \overset{R}{\leftarrow} \mathbb{Z}_p, \hat{g} \overset{R}{\leftarrow} \hat{\mathbb{G}}, v \overset{R}{\leftarrow} \mathbb{G}$ and $u_0, u_1, \ldots, u_L \overset{R}{\leftarrow} \mathbb{G}$ for some $L \in \text{poly}(\lambda)$. These elements $(u_0, u_1, \ldots, u_L) \in \mathbb{G}^{L+1}$ will be used to implement a number theoretic hash function $H_{\mathbb{G}}: \{0,1\}^L \rightarrow \mathbb{G}$ such that any *L*-bit string $m = m[1] \ldots m[L] \in \{0,1\}^L$ has a hash

value $H_{\mathbb{G}}(m) = u_0 \cdot \prod_{i=1}^{L} u_i^{m[i]}$. Pick $g_i \overset{R}{\leftarrow} \mathbb{G}$ for $i$ = 1 to $n$. Finally, define the identifier space $\mathcal{T} := \{0,1\}^L$. The private key is sk := $\alpha$ and the public key consists of

$$\text{pk} := \left((\mathbb{G}, \mathbb{G}_T), \hat{g}, \hat{g}^{\alpha}, v, \{g_i\}_{i=1}^{n}, \{u_i\}_{i=0}^{L}\right).$$

**Sign**(sk, $\tau$, $\vec{v}$): given a vector $\vec{v} = (v_1, \dots v_n) \in \mathbb{Z}_p^n$, a file identifier $\tau$ := $\{0,1\}^L$ and the private key $\text{sk} = \alpha \in \mathbb{Z}_p$, choose $r, s \overset{R}{\leftarrow} \mathbb{Z}_p$. Then, compute a signature $\sigma$ = $(\sigma_1, \sigma_2, s) \in \mathbb{G} \times \hat{\mathbb{G}} \times \mathbb{Z}_p$ as

$$\sigma_1 = (g_1^{v_1} \cdots g_n^{v_n} \cdot v^s)^{\alpha} \cdot H_{\mathbb{G}}(\tau)^r, \qquad \sigma_2 = \hat{g}^r.$$

$\left(\text{pk}, \tau, \left\{\left(\beta_i, \sigma^{(i)}\right)\right\}_{i=1}^{\ell}\right)$: given pk, a file identifier $\tau$ and $\ell$ tuples ($\beta_i$, $\sigma^{(i)}$), parse each $\sigma^{(i)}$ as $\sigma^{(i)} = (\sigma_{i,1}, \sigma_{i,2}, s_i)$ for $i$ = 1 to $\ell$. Choose $\tilde{r} \overset{R}{\leftarrow} \mathbb{Z}_p$. Then, compute and output ($\sigma_1$, $\sigma_2$, $s$), where

$$\sigma_1 = \prod_{i=1}^{\ell} \sigma_{i,1}^{\beta_i} \cdot H_{\mathbb{G}}(\tau)^{\tilde{r}} \qquad \sigma_2 = \prod_{i=1}^{\ell} \sigma_{i,2}^{\beta_i} \cdot \hat{g}^{\tilde{r}} \qquad s = \sum_{i=1}^{\ell} \beta_i \cdot s_i$$

**Verify**(pk, $\tau$, $\vec{y}$, $\sigma$): given pk, a signature $\sigma$ = ($\sigma_1$, $\sigma_2$, $s$) and a message ($\tau$, $\vec{y}$), where $\tau \in \{0,1\}^L$ and $\vec{y} = (y_1, \dots, y_n) \in \left(\mathbb{Z}_p\right)^n$, return $\perp$ if $\vec{y} = \vec{0}$. Otherwise, return 1 if and only if

$$e\left(\sigma_{1,}\hat{g}\right) = e(g_1^{y_1} \cdots g_n^{y_n} \cdot v^s, \hat{g}^{\alpha}) \cdot e(H_{\mathbb{G}}(\tau), \sigma_2).$$

It will be appreciated that in the construction, signatures on the all-zero vector $\vec{0}$ are not allowed. This is not a restriction since, in all applications of linearly homomorphic signatures, a unit vector (0,...,1,...,0) of appropriate length is appended to signed vectors.

In the paper by Attrapadung et al., the above scheme was proved unforgeable under a variant of the Diffie-Hellman assumption. This assumption posits that, given $(g, \hat{g}, g^a, \hat{g}^b) \in \left(\mathbb{G} \times \hat{\mathbb{G}}\right)^2$, for randomly chosen $a, b \in \mathbb{Z}_p$ and where $\left(\mathbb{G}, \hat{\mathbb{G}}\right)$ are cyclic bilinear group of order $p$, no Probabilistic Polynomial Time (PPT) algorithm can compute $g^{ab}$. In the version hereinbefore, the scheme is not completely context hiding (i.e., derived signatures are not statistically independent of original ones). Attrapadung et al. has shown how to modify the scheme so as to make it completely context hiding at the cost of increasing the signature length [see N. Attrapadung, B. Libert, T. Peters. Efficient Completely Context-Hiding Quotable Signatures and Linearly Homomorphic Signatures. In PKC'13, LNCS 7778, pp. 386-404, 2013].

The linearly homomorphic signatures in the prior art only exist for vector spaces where each vector's coordinates

belong to a group, like $(\mathbb{Z}_p, +)$, where it is easy to compute discrete logarithms. It will thus be appreciated that it is desired to have a scheme that can handle vectors $\vec{M}_1 \in \mathbb{G}^n$ whose coordinates live in a discrete-logarithm-hard group G of finite order $p$. One major difficulty is that, in such groups, it is usually difficult to decide whether a plurality of vectors $\vec{M}_1, \ldots, \vec{M}_{n-1} \in \mathbb{G}^n$ are linearly dependent. In general, for $n > 2$, the only known method to do this is to compute the discrete logarithms of all coordinates in $\mathbb{Z}_p$.

It will thus be appreciated that it is desired to have a linearly homomorphic signature scheme where messages can be elements with a special algebraic structure, i.e. a "structure-preserving" signature scheme. The present invention provides such a scheme.

## SUMMARY OF INVENTION

In a first aspect, the invention is directed to a method for generating a homomorphic signature σ on a vector $(M_1, \ldots, M_n) \in \hat{\mathbb{G}}^n$. A processor computes, using a signing key $\mathrm{sk} = \{\chi_i, \gamma_i, \delta_i\}_{i=1}^n$, signature elements ($z$, $r$, $u$) by calculating $z = \prod_{i=1}^n M_i^{-\chi_i}$, $r = \prod_{i=1}^n M_i^{-\gamma_i}$, $u = \prod_{i=1}^n M_i^{-\delta_i}$, and outputs the signature σ comprising the signature elements ($z$, $r$, $u$).

In a first embodiment, the signing key further comprises an element $h_z^{\alpha_r}$, and the processor further chooses random elements $\theta, \rho \xleftarrow{R} \mathbb{Z}_p$ and calculates a further signature element $v = h^\rho$. The calculation of $z$ further comprises a multiplication by $g_r^\theta$, the calculation of $r$ further comprises a multiplication by $g_z^{-\theta}$ and the calculation of $u$ further comprises a multiplication by $(h_z^{\alpha_r})^{-\theta}$; and the signature further comprises the signature element $v$.

In a second aspect, the invention is directed to a method of verifying a homomorphic signature σ comprising signature elements ($z$, $r$, $u$) on a vector $(M_1, \ldots, M_n) \in \hat{\mathbb{G}}^n$. A processor verifies that $(M_1, \ldots, M_n) \neq (1_{\hat{\mathbb{G}}}, \ldots, 1_{\hat{\mathbb{G}}})$ and that ($z$, $r$, $u$) satisfy the equalities

$$1_{\mathbb{G}_T} = e(g_z, z) \cdot e(g_r, r) \cdot \prod_{i=1}^n e(g_i, M_i), \quad 1_{\mathbb{G}_T} = e(h_z, z) \cdot e(h, u) \cdot \prod_{i=1}^n e(h_i, M_i);$$

and determines that the signature has been successfully verified in case the verifications are successful and that the signature has not been successfully verified otherwise.

In a first embodiment, the second equality further comprises a term $e(H_{\mathbb{G}}(\tau), v)$.

In a third aspect, the invention is directed to a device for generating a homomorphic signature σ on a vector $(M_1, \ldots, M_n) \in \hat{\mathbb{G}}^n$. The device comprises a processor configured to: compute, using a signing key $\mathrm{sk} = \{\chi_i, \gamma_i, \delta_i\}_{i=1}^n$, signature elements ($z$, $r$, $u$) by calculating $z = \prod_{i=1}^n M_i^{-\chi_i}$, $r = \prod_{i=1}^n M_i^{-\gamma_i}$, $u = \prod_{i=1}^n M_i^{-\delta_i}$, and output the signature σ comprising the signature elements ($z$, $r$, $u$).

In a first embodiment, the signing key further comprises an element $h_z^{\alpha}r$, the processor is further configured to: choose random elements $\theta, \rho \xleftarrow{R} \mathbb{Z}_p$; calculate a further signature element $v = h^\rho$. The calculation of $z$ further

comprises a multiplication by $g_r^{\theta}$, the calculation of *r* further comprises a multiplication by $g_z^{-\theta}$ and the calculation of *u* further comprises a multiplication by $(h_z^{\alpha_r})^{-\theta}$; and the signature further comprises the signature element *v*.

In a fourth aspect, the invention is directed to a device for verifying a homomorphic signature σ comprising signature elements (*z, r, u*) on a vector $(M_1, \ldots, M_n) \in \hat{\mathbb{G}}^n$. The device comprises a processor configured to: verify that $(M_1, \ldots, M_n) \neq (1_{\hat{\mathbb{G}}}, \ldots, 1_{\hat{\mathbb{G}}})$ and that (*z, r, u*) satisfy a first equality $1_{\mathbb{G}_T} = e(g_z, z) \cdot e(g_r, r) \cdot \prod_{i=1}^{n} e(g_i, M_i)$ and a second equality $1_{\mathbb{G}_T} = e(h_z, z) \cdot e(h, u) \cdot \prod_{i=1}^{n} e(h_i, M_i)$; and determine that the signature has been successfully verified in case the verifications are successful and that the signature has not been successfully verified otherwise. In a first embodiment, the second equality further comprises a term $e(H_{\mathbb{G}}(\tau), v)$.

BRIEF DESCRIPTION OF DRAWINGS

Preferred features of the present invention will now be described, by way of non-limiting example, with reference to the accompanying drawings, in which:

Figure 1 illustrates a structure-preserving linearly homomorphic signature system according to a preferred embodiment of the invention; and
Figure 2 illustrates a method for generating and verifying context-hiding linearly homomorphic structure-preserving signatures according to a preferred embodiment of the invention.

DESCRIPTION OF EMBODIMENTS

The structure-preserving linearly homomorphic signature scheme of the present invention is based on a modification of a structure-preserving signature scheme proposed in M. Abe, K. Haralambiev, M. Ohkubo. Signing on Elements in Bilinear Groups for Modular Protocol Design. Cryptology ePrint Archive: Report 2010/133, 2010 and in M. Abe, G. Fuchsbauer, J. Groth, K. Haralambiev, M. Ohkubo. Structure-Preserving Signatures and Commitments to Group Elements. In Crypto'10, Lecture Notes in Computer Science, vol. 6223, pp. 209-236, 2010 [see Appendix C of the first document for a description]. It will be appreciated that the scheme neither is nor was meant to be homomorphic and it only allows signing one message with respect to given public key.

A first modification is thus made so as to obtain a linearly homomorphic signature scheme over a discrete-logarithm-hard group as long as only one linear $\hat{\mathbb{G}}^n$ subspace (spanned by *n*-1 linearly independent vectors of ) is signed using a given key pair (sk; pk). This first scheme can be described as follows. In the following notations, pp denotes a set of public parameters consisting of groups $(\mathbb{G}, \hat{\mathbb{G}}, \mathbb{G}_T)$ of prime order $p > 2^{\lambda}$, where $\lambda \in \mathbb{N}$ is the security parameter, over which an efficiently computable bilinear map $e: \mathbb{G} \times \hat{\mathbb{G}} \rightarrow \mathbb{G}_T$ is defined.

Figure 1 illustrates a cryptographic signing device 100 for generating homomorphic signatures and a cryptographic signing device 200 for verification of homomorphic signatures according to a preferred embodiment of the invention. The devices 100, 200 each comprise at least one interface unit 110, 210 configured for communication, at least one processor ("processor") 120, 220 and at least one memory 130, 230 configured for storing data, such as accumulators and intermediary calculation results. The Figure also shows a first and a second computer program product (non-transitory storage medium) 140, 240 such as a CD-ROM or a DVD comprises stored instructions that, when executed by the processor 120, 220, respectively generate generate and verify a signature according to the present invention.

**One-time scheme:**

**Keygen**(pp, *n*): given pp and the dimension $n \in$ N of the subspace to be signed, choose generators $h, g_z, g_r, z_z \xleftarrow{R} \mathbb{G}$. Pick $\chi_i, \gamma_i, \delta_i \xleftarrow{R} \mathbb{Z}_p$ for $i = 1$ to $n$. Then, for each $i \in \{1, \ldots, n\}$, compute

$g_i = g_z^{\chi_i} g_r^{\gamma_i}$, $h_i = h_z^{\chi_i} h^{\delta_i}$. The public key is defined as

$$\mathrm{pk} = (g_z, h_r, h_z, h, \{g_i, h_i\}_{i=1}^{n}) \in \mathbb{G}^{2n+4}$$

and the private key as $\mathrm{sk} = \{\chi_i, \gamma_i, \delta_i\}_{i=1}^{n}$.

**Sign**(sk, τ, ($M_1$, ... , $M_n$)): to sign a vector $(M_1, \ldots, M_n) \in \hat{\mathbb{G}}^n$ associated with the identifier τ = ε using $\mathrm{sk} = \{\chi_i, \gamma_i, \delta_i\}_{i=1}^{n}$, compute

$$z = \prod_{i=1}^{n} M_i^{-\chi_i}, \quad r = \prod_{i=1}^{n} M_i^{-\gamma_i}, \quad u = \prod_{i=1}^{n} M_i^{-\delta_i},$$

The signature comprises $\sigma = (z, r, u) \in \hat{\mathbb{G}}^3$.

**SignDerive**$\left(\mathrm{pk}, \tau, \{(\omega_i, \sigma^{(i)})\}_{i=1}^{\ell}\right)$: given pk, a file identifier τ and ℓ tuples ($\omega_i$, $\sigma^{(i)}$), parse each signature $\sigma^{(i)}$ as $\sigma^{(i)} = (z_i, r_i, u_i) \in \hat{\mathbb{G}}^3$ for $i$ = 1 to ℓ. Compute

$$z = \prod_{i=1}^{\ell} z_i^{\omega_i} \quad r = \prod_{i=1}^{\ell} r_i^{\omega_i} \quad u = \prod_{i=1}^{\ell} u_i^{\omega_i}$$

and return σ = ($z$, $r$, $u$).

**Verify**(pk, σ, τ, ($M_1$, ... , $M_n$)): given a signature $\sigma = (z, r, u) \in \hat{\mathbb{G}}^3$, a vector ($M_1$, ... , $M_n$) and a file identifier τ = ε, return 1 if and only if $(M_1, \ldots, M_n) \neq (1_{\hat{\mathbb{G}}}, \ldots, 1_{\hat{\mathbb{G}}})$ and ($z$, $r$, $u$) satisfy the equalities

$$1_{\mathbb{G}_T} = e(g_z, z) \cdot e(g_r, r) \cdot \prod_{i=1}^{n} e(g_i, M_i), \quad 1_{\mathbb{G}_T} = e(h_z, z) \cdot e(h, u) \cdot \prod_{i=1}^{n} e(h_i, M_i).$$

It can be proved that an adversary obtaining signatures on at most $n$-1 linearly independent vectors $\vec{M}_1$, ... , $\vec{M}_{n-1}$ is unable to forge a signature on a vector $\vec{M} \notin \mathrm{span}(\vec{M}_1, \ldots, \vec{M}_{n-1})$ as long as the Simultaneous Double Pairing (SDP) assumption holds. The SDP assumption, described in the paper by Abe, Haralambiev and Ohkubo, is to, in $(\mathbb{G}, \hat{\mathbb{G}})$, given a tuple of elements $(g_z, g_r, h_z, h_u) \in \mathbb{G}^4$, find a non-trivial tuple $(z, r, u) \in \hat{\mathbb{G}}^3 \backslash \{(1_{\hat{\mathbb{G}}}, 1_{\hat{\mathbb{G}}}, 1_{\hat{\mathbb{G}}})\}$ such that $e(g_z \cdot z) \cdot e(g_r \cdot r) = 1_{\mathbb{G}_T}$ and $e(h_z \cdot z) \cdot e(h_u \cdot u) = 1_{\mathbb{G}_T}$.

**Full-fledged scheme:**

The one-time scheme can be upgraded to a linear construction allowing to sign an arbitrary number of linear

subspaces. To do this, a configuration of bilinear groups $(\mathbb{G}, \widehat{\mathbb{G}})$ for which $\mathbb{G} = \widehat{\mathbb{G}}$ is needed. In other words, the bilinear map $e: \mathbb{G} \times \mathbb{G} \rightarrow \mathbb{G}_T$ must have both of its arguments in the same group $\mathbb{G}$ because it should be symmetric and commutative.

In the construction, each file identifier $\tau$ consists of a $L$-bit string, for some $L \in \text{poly}(\lambda)$. The $u$ component of each signature can be seen as an aggregation of the signature of the one-time scheme with a Waters signature $\left(h_z^{\alpha_r} \cdot H_{\mathbb{G}}(\tau)^{-\rho}, h^{\rho}\right)$ on the file identifier $\tau$ [see B. Waters. Efficient Identity-Based Encryption Without Random Oracles. In Eurocrypt'05, Lecture Notes in Computer Science, vol. 3494, pp. 114-127, 2005]. In the present scheme, such a Waters signature is used as a support for a signature randomizer $\theta \in \mathbb{Z}_p$.

**Keygen**(pp, $n$): given pp and the dimension $n \in \mathrm{N}$ of the subspace to be signed, perform the following steps:

1. Choose $h \overset{R}{\leftarrow} \mathbb{G}$ and $\alpha_z, \alpha_r, \beta_z \overset{R}{\leftarrow} \mathbb{Z}_p$. Define $g_z = h^{\alpha_z}$, $g_r = h^{\alpha_r}$ and $h_z = h^{\beta_z}$.

2. For $i$ = 1 to n, pick $\chi_i, \gamma_i, \delta_i \overset{R}{\leftarrow} \mathbb{Z}_p$ and compute $g_i = g_z^{\chi_i} g_r^{\gamma_i}$, $h_i = h_z^{\chi_i} h^{\delta_i}$.

3. Choose a random vector $\overline{\mathbf{w}} = (w_0, w_1, \ldots, w_L) \overset{R}{\leftarrow} \mathbb{G}^{L+1}$ that defines a hash function $H_{\mathbb{G}}: \{0,1\}^L \rightarrow \mathbb{G}$ which maps $\tau = \tau[1] \ldots \tau[L] \in \{0,1\}^L$ to $H_{\mathbb{G}}(\tau) = w_0 \cdot \prod_{k=1}^{L} w_k^{\tau[k]}$.

The public key consists of

$$\text{pk} = (g_z, g_r, h_z, h, \{g_i, h_i\}_{i=1}^{n}, \overline{\mathbf{w}}) \in \mathbb{G}^{2n+4} \times \mathbb{G}^{L+1}$$

while the private key is $\text{sk} = (h_z^{\alpha_r}, \{\chi_i, \gamma_i, \delta_i\}_{i=1}^{n})$.

**Sign**(sk, $\tau$, ($M_1$, ... , $M_n$)): to sign a vector $(M_1, \ldots, M_n) \in \mathbb{G}^n$ with regard to the file identifier $\tau$ using $\text{sk} = (h_z^{\alpha_r}, \{\chi_i, \gamma_i, \delta_i\}_{i=1}^{n})$, choose $\theta, \rho \overset{R}{\leftarrow} \mathbb{Z}_p$ and compute

$$z = g_r^{\theta} \cdot \prod_{i=1}^{n} M_i^{-\chi_i}, \quad r = g_z^{-\theta} \cdot \prod_{i=1}^{n} M_i^{-\gamma_i}, \quad u = (h_z^{\alpha_r})^{-\theta} \cdot \prod_{i=1}^{n} M_i^{-\delta_i} \cdot H_{\mathbb{G}}(\tau)^{-\rho}, \quad v = h^{\rho}$$

The signature comprises $\sigma = (z, r, u, v) \in \mathbb{G}^4$.

**SignDerive**$\left(\text{pk}, \tau, \{(\omega_i, \sigma^{(i)})\}_{i=1}^{\ell}\right)$: given pk, a file identifier $\tau$ and $\ell$ tuples ($\omega_i$, $\sigma^{(i)}$), parse each signature $\sigma^{(i)}$ as $\sigma^{(i)} = (z_i, r_i, u_i, v_i) \in \mathbb{G}^4$ for $i$ = 1 to $\ell$. Then choose $\rho' \overset{R}{\leftarrow} \mathbb{Z}_p$ and compute

$$z = \prod_{i=1}^{\ell} z_i^{\omega_i} \quad r = \prod_{i=1}^{\ell} r_i^{\omega_i} \quad u = \prod_{i=1}^{\ell} u_i^{\omega_i} \cdot H_{\mathbb{G}}(\tau)^{-\rho'} \quad v = \prod_{i=1}^{\ell} v_i^{\omega_i} \cdot h^{\rho'}$$

and return $\sigma = (z, r, u, v)$.

**Verify**(pk, $\sigma$, $\tau$, $(M_1, \ldots, M_n)$): given a signature $\sigma = (z, r, u, v) \in \mathbb{G}^4$, a file identifier $\tau$ and a vector $(M_1, \ldots, M_n)$, return 1 if and only if $(M_1, \ldots, M_n) \neq (1_{\mathbb{G}}, \ldots, 1_{\mathbb{G}})$ and $(z, r, u, v)$ satisfy the equalities

$$1_{\mathbb{G}_T} = e(g_z, z) \cdot e(g_r, r) \cdot \prod_{i=1}^{n} e(g_i, M_i),$$

$$1_{\mathbb{G}_T} = e(h_z, z) \cdot e(h, u) \cdot e(H_{\mathbb{G}}(\tau), v) \cdot \prod_{i=1}^{n} e(h_i, M_i).$$

It will be appreciated that the one-time scheme is a special case of the full-fledged scheme where $\theta = \rho = 0$ in each signature.

**Context-hiding scheme:**

It will be appreciated that the full-fledged scheme does not provide complete context-hiding security because the signature derivation operation cannot re-randomize the underlying $\theta$ without knowing the private key. In some applications it may be desirable to make sure that derived signatures and original ones are unlinkable, even in the view of a computationally unbounded observer.

For this reason, the preferred embodiment is a scheme that can be proved completely context-hiding. This scheme is obtained by modifying the full-fledged scheme. Essentially, the signer first computes a signature $\sigma = (z, r, u, v)$ as in the the full-fledged scheme. Since elements $(z, r, u)$ cannot be publicly re-randomized, the signer only lets them appear within Groth-Sahai commitments [see J. Groth, A. Sahai. Efficient non-interactive proof systems for bilinear groups. In Eurocrypt'08, Lecture Notes in Computer Science, vol. 4965, pp. 415-432, 2008.] and adds a non-interactive proof that committed values satisfy the verification equations. The perfect randomizability properties (shown in M. Belenkiy, J. Camenisch, M. Chase, M. Kohlweiss, A. Lysyanskaya, H. Shacham. Randomizable Proofs and Delegatable Anonymous Credentials. In Crypto'09, Lecture Notes in Computer Science, vol. 5677, pp. 108-125, 2009.) of Groth-Sahai proofs guarantee that derived signatures will be distributed as freshly generated signatures.

In the following description, it is againrequired that the bilinear map $e: \mathbb{G} \times \mathbb{G} \to \mathbb{G}_T$ is symmetric (i.e. $\mathbb{G} = \hat{\mathbb{G}}$). In the following notations, a coordinate-wise pairing $E: \mathbb{G} \times \hat{\mathbb{G}}^3 \to \mathbb{G}_T^3$ is defined such that, for any element $h \in \mathbb{G}$ and any vector $\vec{g} = (g_1, g_2, g_3)$, $E(h, \vec{g}) = (e(h, g_1), e(h, g_2), e(h, g_3))$.

Figure 2 illustrates Sign, SignDerive and Verify of the following scheme.

**Keygen**(pp, $n$): given pp and the dimension $n \in$ N of the subspace to be signed, perform the following steps:

1. Choose $h \stackrel{R}{\leftarrow} \mathbb{G}$ and $\alpha_z, \alpha_r, \beta_z \stackrel{R}{\leftarrow} \mathbb{Z}_p$. Define $g_z = h^{\alpha_z}$, $g_r = h^{\alpha_r}$ and $h_z = h^{\beta_z}$.

2. For each $i \in \{1, \ldots, n\}$, pick $\chi_i, \gamma_i, \delta_i \stackrel{R}{\leftarrow} \mathbb{Z}_p$ and compute $g_i = g_z^{\chi_i} g_r^{\gamma_i}$, $h_i = h_z^{\chi_i} h^{\delta_i}$.

3. Choose a Groth-Sahai common reference string by choosing $f_1, f_2 \stackrel{R}{\leftarrow} \mathbb{G}$ and defining vectors $\vec{f_1} = (f_1, 1, g) \in \mathbb{G}^3$, $\vec{f_2} = (1, f_2, g) \in \mathbb{G}^3$ and $\vec{f_3} \stackrel{R}{\leftarrow} \mathbb{G}^3$.

The public key consists of

$$\mathrm{pk} = \left(g_z, g_r, h_z, h, \{g_i, h_i\}_{i=1}^{n}, \mathbf{f} = \left(\vec{f_1}, \vec{f_2}, \vec{f_3}\right)\right)$$

while the private key is .

**Sign**(sk, τ, ($M_1$, ... , $M_n$)): to sign a vector $(M_1, \ldots, M_n) \in \mathbb{G}^n$ with regard to the file identifier τ using $\mathrm{sk} = (h_z{}^{\alpha_r}, \{\chi_i, \gamma_i, \delta_i\}_{i=1}^{n})$, perform:

1. Choose S1 S1 $\theta, \rho \overset{R}{\leftarrow} \mathbb{Z}_p$ and compute

$$z = g_r^{\theta} \cdot \prod_{i=1}^{n} M_i{}^{-\chi_i}, \quad r = g_z^{-\theta} \cdot \prod_{i=1}^{n} M_i{}^{-\gamma_i}$$

$$u = (h_z{}^{\alpha_r})^{-\theta} \cdot \prod_{i=1}^{n} M_i{}^{-\delta_i} \cdot H_{\mathbb{G}}(\tau)^{-\rho}, \quad v = h^{\rho}$$

2. Using the vectors **f** = ($\vec{f}_1$,$\vec{f}_2$,$\vec{f}_3$), compute S2 commitments

$$\vec{C}_z = (1_{\mathbb{G}}, 1_{\mathbb{G}}, z) \cdot \vec{f_1}^{v_{z,1}} \cdot \vec{f_2}^{v_{z,2}} \cdot \vec{f_3}^{v_{z,3}}$$

$$\vec{C}_r = (1_{\mathbb{G}}, 1_{\mathbb{G}}, r) \cdot \vec{f_1}^{v_{r,1}} \cdot \vec{f_2}^{v_{r,2}} \cdot \vec{f_3}^{v_{r,3}}$$

$$\vec{C}_u = (1_{\mathbb{G}}, 1_{\mathbb{G}}, u) \cdot \vec{f_1}^{v_{u,1}} \cdot \vec{f_2}^{v_{u,2}} \cdot \vec{f_3}^{v_{u,3}}$$

to $z$, $r$ and $u$, respectively. Using the randomness of these commitments, generate proofs $\vec{\pi}_1 = \left(\pi_{1,1}, \pi_{1,2}, \pi_{1,3}\right) \in \mathbb{G}^3$ and $\vec{\pi}_2 = \left(\pi_{2,1}, \pi_{2,2}, \pi_{2,3}\right) \in \mathbb{G}^3$ that ($z$, $r$, $u$) satisfy the verification equations of the full-fledged scheme, i.e.

$$1_{\mathbb{G}_T} = e(g_z, z) \cdot e(g_r, r) \cdot \prod_{i=1}^{n} e(g_i, M_i),$$

$$1_{\mathbb{G}_T} = e(h_z, z) \cdot e(h, u) \cdot e(H_{\mathbb{G}}(\tau), v) \cdot \prod_{i=1}^{n} e(h_i, M_i).$$

These proofs are obtained as

$$\vec{\pi}_1 = (\pi_{1,1}, \pi_{1,2}, \pi_{1,3}) = (g_z^{-v_{z,1}} \cdot g_r^{-v_{r,1}}, g_z^{-v_{z,2}} \cdot g_r^{-v_{r,2}}, g_z^{-v_{z,3}} \cdot g_r^{-v_{r,3}})$$

$$\vec{\pi}_2 = (\pi_{2,1}, \pi_{2,2}, \pi_{2,3}) = (h_z^{-v_{z,1}} \cdot h_r^{-v_{u,1}}, h_z^{-v_{z,2}} \cdot h_r^{-v_{u,2}}, h_z^{-v_{z,3}} \cdot h_r^{-v_{u,3}})$$

and satisfy the verification equations

$$\prod_{i=1}^{n} E(g_i, (1_{\mathbb{G}}, 1_{\mathbb{G}}, M_i))^{-1} = E(g_z, \vec{C}_z) \cdot E(g_r, \vec{C}_r) \cdot E(\pi_{1,1}, \vec{f_1}) \cdot E(\pi_{1,2}, \vec{f_2}) \cdot E(\pi_{1,3}, \vec{f_3})$$

$$\prod_{i=1}^{n} E(h_i, (1_{\mathbb{G}}, 1_{\mathbb{G}}, M_i))^{-1} \cdot E(H_{\mathbb{G}}(\tau), (1_{\mathbb{G}}, 1_{\mathbb{G}}, v))^{-1} = E(h_z, \vec{C}_z) \cdot E(h, \vec{C}_u) \cdot E(\pi_{2,1}, \vec{f_1})$$
$$\cdot E(\pi_{2,2}, \vec{f_2}) \cdot E(\pi_{2,3}, \vec{f_3})$$

The signature comprises $\sigma = (\vec{C}_z, \vec{C}_r, \vec{C}_u, v, \vec{\pi}_1, \vec{\pi}_2) \in \mathbb{G}^{16}$.

**SignDerive**$\left(\mathrm{pk}, \tau, \{(\omega_i, \sigma^{(i)})\}_{i=1}^{\ell}\right)$: given pk, a file identifier $\tau$ and $\ell$ tuples $(\omega_i, \sigma^{(i)})$, parse each signature $\sigma^{(i)}$ as a tuple of the form $\sigma^{(i)} = (\vec{C}_{z,i}, \vec{C}_{r,i}, \vec{C}_{u,i}, v_i, \vec{\pi}_{1,i}, \vec{\pi}_{2,i}) \in \mathbb{G}^{16}$ for $i$ = 1 to $\ell$. Choose $\rho' \xleftarrow{R} \mathbb{Z}_p$ and compute

$$\vec{C}_z = \prod_{i=1}^{\ell} \vec{C}_{z,i}^{\ \omega_i} \quad \vec{C}_r = \prod_{i=1}^{\ell} \vec{C}_{r,i}^{\ \omega_i} \quad \vec{C}_u = \prod_{i=1}^{\ell} \vec{C}_{u,i}^{\ \omega_i} \cdot H_{\mathbb{G}}(\tau)^{-\rho'}$$

$$v = \prod_{i=1}^{\ell} v_i^{\omega_i} \cdot h^{\rho'} \quad \vec{\pi}_1 = \prod_{i=1}^{\ell} \vec{\pi}_{1,i}^{\ \omega_i} \quad \vec{\pi}_2 = \prod_{i=1}^{\ell} \vec{\pi}_{2,i}^{\ \omega_i}$$

Then S3 re-randomize the commitments and proofs and return $\sigma = (\vec{C}_z, \vec{C}_r, \vec{C}_u, v, \vec{\pi}_1, \vec{\pi}_2)$.

**Verify**(pk, $\sigma$, $\tau$, $(M_1, \ldots, M_n)$): given a pair $(\tau, (M_1, \ldots, M_n))$ and a purported signature $\sigma$, parse the signature as $(\vec{C}_{z,i}, \vec{C}_{r,i}, \vec{C}_{u,i}, v_i, \vec{\pi}_{1,i}, \vec{\pi}_2)$. Then, S5 return 1 if and only if $(M_1, \ldots, M_n) \neq (1_{\mathbb{G}}, \ldots, 1_{\mathbb{G}})$ and the **Sign** verifications are satisfied S4, i.e.

$$\prod_{i=1}^{n} E(g_i, (1_{\mathbb{G}}, 1_{\mathbb{G}}, M_i))^{-1} = E(g_z, \vec{C}_z) \cdot E(g_r, \vec{C}_r) \cdot E(\pi_{1,1}, \vec{f_1}) \cdot E(\pi_{1,2}, \vec{f_2}) \cdot E(\pi_{1,3}, \vec{f_3})$$

$$\prod_{i=1}^{n} E\big(h_i,(1_{\mathbb{G}},1_{\mathbb{G}},M_i)\big)^{-1}\cdot E\big(H_{\mathbb{G}}(\tau),(1_{\mathbb{G}},1_{\mathbb{G}},v)\big)^{-1} = E\big(h_z,\vec{C_z}\big)\cdot E\big(h,\vec{C_u}\big)\cdot E\big(\pi_{2,1},\vec{f_1}\big)\cdot E\big(\pi_{2,2},\vec{f_2}\big)\cdot E\big(\pi_{2,3},\vec{f_3}\big)$$

The unforgeability of the scheme can be proved under the Decision Linear assumption, which informally says that it is infeasible to decide whether three vectors of group elements of dimension 3 are linearly dependent or not. Moreover, the scheme is unconditionally context-hiding.

The advantage of the present invention is that it can allow a signer to sign vectors consisting of group elements without knowing their discrete logarithms. For example, the signature schemes make it possible for the signer to sign ciphertexts without necessarily knowing the underlying plaintext.

It will be appreciated that the schemes of the present invention can be used to outsource encrypted datasets in cloud computing services. In addition, linearly homomorphic signatures can also serve as proofs of correct aggregation in anonymous recommendation systems.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of generating a homomorphic signature σ on a vector $(M_1,\dots,M_n)\in\hat{\mathbb{G}}^n$, the method comprising the steps in a processor (120) of a device (100), of:

   - computing, using a signing key $\mathrm{sk}=\{\chi_i,\gamma_i,\delta_i\}_{i=1}^{n}$, signature elements (*z, r, u*) by calculating

   $$z=\prod_{i=1}^{n} M_i^{-\chi_i},\quad r=\prod_{i=1}^{n} M_i^{-\gamma_i},\quad u=\prod_{i=1}^{n} M_i^{-\delta_i},$$

   and
   - outputting the signature σ comprising the signature elements (*z*, *r*, *u*).

2. The method of claim 1, wherein the signing key further comprises an element $h_z^{\alpha_r}$, the method further comprising the steps of:

   - choosing random elements $\theta,\rho\overset{R}{\leftarrow}\mathbb{Z}_p$;
   - calculating a further signature element $v=h^{\rho}$;

   wherein the calculation of *z* further comprises a multiplication by $g_r^{\theta}$, the calculation of *r* further comprises a multiplication by $g_z^{-\theta}$ and the calculation of *u* further comprises a multiplication by $(h_z^{\alpha_r})^{-\theta}$; and wherein the signature further comprises the signature element *v*.

3. A method of verifying a homomorphic signature σ comprising signature elements (*z, r, u*) on a vector $(M_1,\dots,M_n)\in\hat{\mathbb{G}}^n$, the method comprising the steps in a processor (220) of a device (200), of:

   - verifying that $(M_1,\dots,M_n)\neq(1_{\hat{\mathbb{G}}},\dots,1_{\hat{\mathbb{G}}})$ and that (*z*, *r*, *u*) satisfy a first equality $1_{\mathbb{G}_T}=e(g_z,z)\cdot e(g_r,r)\cdot\prod_{i=1}^{n}e(g_i,M_i)$ and a second equality $1_{\mathbb{G}_T}=e(h_z,z)\cdot e(h,u)\cdot$

$\prod_{i=1}^{n} e(h_i, M_i)$; and

- determining that the signature has been successfully verified in case the verifications are successful and that the signature has not been successfully verified otherwise.

**4.** The method of claim 3, wherein the second equality further comprises a term $e(H_{\mathbb{G}}(\tau), v)$.

**5.** A device (100) for generating a homomorphic signature σ on a vector $(M_1, \dots, M_n) \in \widehat{\mathbb{G}}^n$, the device (100) comprising a processor (120) configured to:

- compute, using a signing key $\mathrm{sk} = \{\chi_i, \gamma_i, \delta_i\}_{i=1}^{n}$, signature elements (*z*, *r*, *u*) by calculating

$$z = \prod_{i=1}^{n} M_i^{-\chi_i}, \quad r = \prod_{i=1}^{n} M_i^{-\gamma_i}, \quad u = \prod_{i=1}^{n} M_i^{-\delta_i},$$

and

- output the signature σ comprising the signature elements (*z*, *r*, *u*).

**6.** The device of claim 5, wherein the signing key further comprises an element $h_z^{\alpha_r}$, the processor is further configured to:

- choose random elements $\theta, \rho \overset{R}{\leftarrow} \mathbb{Z}_p$; and
- calculate a further signature element $v = h^{\rho}$;

wherein the calculation of *z* further comprises a multiplication by $g_r^{\theta}$, the calculation of *r* further comprises a multiplication by $g_z^{-\theta}$ and the calculation of *u* further comprises a multiplication by $(h_z^{\alpha_r})^{-\theta}$; and wherein the signature further comprises the signature element *v*.

**7.** A device (200) for verifying a homomorphic signature σ comprising signature elements (*z*, *r*, *u*) on a vector $(M_1, \dots, M_n) \in \widehat{\mathbb{G}}^n$, the device (200) comprising a processor (220) configured to:

- verify that $(M_1, \dots, M_n) \neq (1_{\widehat{\mathbb{G}}}, \dots, 1_{\widehat{\mathbb{G}}})$ and that (*z*, *r*, *u*) satisfy a first equality $1_{\mathbb{G}_T} = e(g_z, z) \cdot e(g_r, r) \cdot \prod_{i=1}^{n} e(g_i, M_i)$ and a second equality $1_{\mathbb{G}_T} = e(h_z, z) \cdot e(h, u) \cdot \prod_{i=1}^{n} e(h_i, M_i)$; and
- determine that the signature has been successfully verified in case the verifications are successful and that the signature has not been successfully verified otherwise.

**8.** The device of claim 7, wherein the second equality further comprises a term $e(H_{\mathbb{G}}(\tau), v)$.

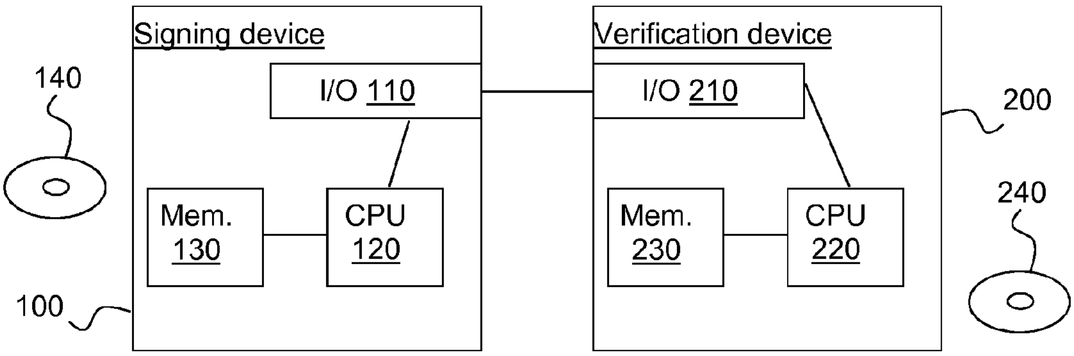


Figure 1

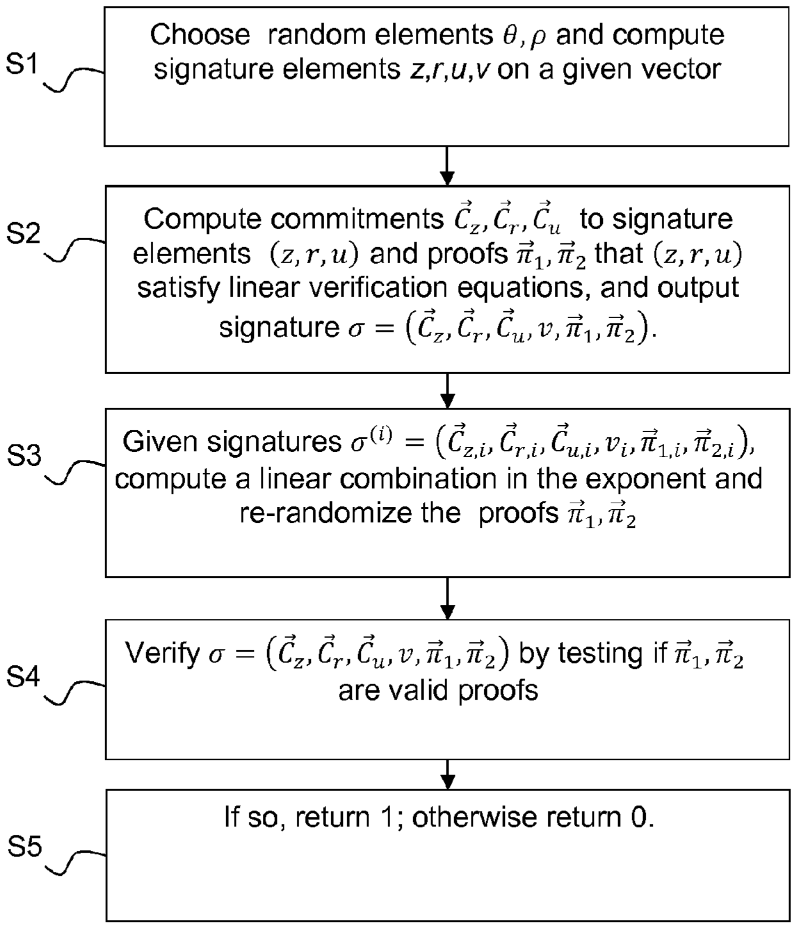


Figure 2

Europäisches Patentamt
European Patent Office
Office européen des brevets

# EUROPEAN SEARCH REPORT

Application Number
EP 13 30 5371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MASAYUKI ABE ET AL: "Signing on Elements in Bilinear Groups for Modular Protocol Design", INTERNATIONAL ASSOCIATION FOR CRYPTOLOGIC RESEARCH,, vol. 20100922:121234, 22 September 2010 (2010-09-22), pages 1-43, XP061004243, [retrieved on 2010-09-22] * section 6.3 and appendix C * ----- | 1-8 | INV. H04L9/32 |
| A,D | NUTTAPONG ATTRAPADUNG ET AL: "Efficient Completely Context-Hiding Quotable and Linearly Homomorphic Signatures", 26 February 2013 (2013-02-26), PUBLIC-KEY CRYPTOGRAPHY PKC 2013, SPRINGER BERLIN HEIDELBERG, BERLIN, HEIDELBERG, PAGE(S) 386 - 404, XP047022603, ISBN: 978-3-642-36361-0 * the whole document * ----- | 1-8 | |
| | | | TECHNICAL FIELDS SEARCHED (IPC) |
| | | | H04L |

The present search report has been drawn up for all claims

1

| Place of search | Date of completion of the search | Examiner |
|---|---|---|
| Munich | 12 September 2013 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7743253 B, D.-X. Charles, K. Jain, K. Lauter


### Non-patent literature cited in the description


- **D. BONEH ; D. FREEMAN ; J. KATZ ; B. WATERS.** Signing a Linear Subspace: Signature Schemes for Network Coding. *PKC'09, Lecture Notes in Computer Science,* 2009, vol. 5443, 68-87
- **R. GENNARO ; J. KATZ ; H. KRAWCZYK ; T. RABIN.** Secure Network Coding over the Integers. *PKC'10, Lecture Notes in Computer Science,* 2010, vol. 6056, 142-160
- **N. ATTRAPADUNG ; B. LIBERT.** Homomorphic Network Coding Signatures in the Standard Model. *PKC'11, Lecture Notes in Computer Science,* 2011, vol. 6571, 17-34
- **D. BONEH ; D. FREEMAN.** Linearly Homomorphic Signatures over Binary Fields and New Tools for Lattice-Based Signatures. *PKC'11, Lecture Notes in Computer Science,* 2011, vol. 6571, 1-16
- **D. BONEH ; D. FREEMAN.** Homomorphic Signatures for Polynomial Functions. *Eurocrypt'11, Lecture Notes in Computer Science,* 2011, vol. 6632, 149-168
- **D. FREEMAN.** Improved security for linearly homomorphic signatures: A generic framework. *PKC'12, Lecture Notes in Computer Science,* 2012, vol. 7293, 697-714
- **D. CATALANO ; D. FIORE ; B.WARINSCHI.** Adaptive Pseudo-free Groups and Applications. *Eurocrypt'11, Lecture Notes in Computer Science,* 2011, vol. 6632, 207-223
- **D. CATALANO ; D. FIORE ; B.WARINSCHI.** Efficient Network Coding Signatures in the Standard Model. *PKC'12, Lecture Notes in Computer Science,* 2012, vol. 7293, 680-696
- **N. ATTRAPADUNG ; B. LIBERT ; T. PETERS.** Computing on Authenticated Data: New Privacy Definitions and Constructions. *Asiacrypt'12, LNCS,* 2012, vol. 7658, 367-385
- **N. ATTRAPADUNG ; B. LIBERT ; T. PETERS.** Efficient Completely Context-Hiding Quotable Signatures and Linearly Homomorphic Signatures. *PKC'13, LNCS,* 2013, vol. 7778, 386-404
- **M. ABE ; K. HARALAMBIEV ; M. OHKUBO.** Signing on Elements in Bilinear Groups for Modular Protocol Design. *Cryptology ePrint Archive: Report 2010/133,* 2010
- **M. ABE ; G. FUCHSBAUER ; J. GROTH ; K. HARALAMBIEV ; M. OHKUBO.** Structure-Preserving Signatures and Commitments to Group Elements. *Crypto'10, Lecture Notes in Computer Science,* 2010, vol. 6223, 209-236
- **B. WATERS.** Efficient Identity-Based Encryption Without Random Oracles. *Eurocrypt'05, Lecture Notes in Computer Science,* 2005, vol. 3494, 114-127
- **J. GROTH ; A. SAHAI.** Efficient non-interactive proof systems for bilinear groups. *Eurocrypt'08, Lecture Notes in Computer Science,* 2008, vol. 4965, 415-432
- **M. BELENKIY ; J. CAMENISCH ; M. CHASE ; M. KOHLWEISS ; A. LYSYANSKAYA ; H. SHACHAM.** Randomizable Proofs and Delegatable Anonymous Credentials. *Crypto'09, Lecture Notes in Computer Science,* 2009, vol. 5677, 108-125